Europäisches Patentamt

European Patent Office

Office européen des brevets

(11) Numéro de publication: **0 067 747**

**B1**

# (12) FASCICULE DE BREVET EUROPEEN

(45) Date de publication du fascicule du brevet: **03.09.86**

(51) Int. Cl.⁴: **F 02 K 1/70**

(21) Numéro de dépôt: **82400968.2**

(22) Date de dépôt: **26.05.82**

(54) Dispositif d'inversion de poussée pour turboréacteur d'avion.

(30) Priorité: **29.05.81 FR 8110693**

(43) Date de publication de la demande:
**22.12.82 Bulletin 82/51**

(45) Mention de la délivrance du brevet:
**03.09.86 Bulletin 86/36**

(84) Etats contractants désignés:
**DE GB NL**

(56) Documents cités:
**EP-A-0 043 764**
**FR-A-1 482 538**
**FR-A-2 146 109**
**GB-A-1 177 864**
**NL-C- 67 983**
**US-A-3 113 428**
**US-A-3 605 411**

(73) Titulaire: **SOCIETE DE CONSTRUCTION DES AVIONS HUREL-DUBOIS**
**39 rue Grange Dame-Rose**
**F-92360 Meudon-la-Foret (FR)**

(72) Inventeur: **Fournier, Alain**
**34, rue Pierre Corby**
**F-92140 Clamart (FR)**
Inventeur: **Kennedy, John**
**6, square du Pont de Sèvres**
**F-92100 Boulogne (FR)**

(74) Mandataire: **Sauvage, Renée**
**CABINET SAUVAGE 100 bis, avenue de Saint-Mandé**
**F-75012 Paris (FR)**

Courier Press, Leamington Spa, England.

## Description

La présente invention concerne un dispositif d'inversion de poussée en combinaison avec un turboréacteur d'avion à capotage extérieur entourant une structure de moteur délimitant avec celle-ci un canal annulaire pour l'écoulement d'un flux gazeux depuis une région amont vers une région aval. Plus particulièrement, l'invention concerne un dispositif d'inversion qui est constitué par des éléments mobiles d'une section intermédiaire du capotage qui sont susceptibles de basculer d'une position inactive dans laquelle ils se trouvent dans le prolongement de la partie fixe du capotage, à une position d'inversion de poussée dans laquelle ils s'étendent transversalement par rapport au canal annulaire qu'ils obturent tout en libérant dans le capotage un passage permettant au flux d'être dévié vers l'extérieur et vers l'amont. On connaît déjà, notamment par le brevet français 1482538 un tel dispositif dans lequel les éléments mobiles sont constitués par des portes, appelées segments dans le brevet 1482538, articulées dans une zone intermédiaire de leur longueur sur une partie fixe du capotage, ces portes présentant ainsi des parties amont et aval qui, en position d'inversion, font respectivement saillie à l'extérieur du capotage pour la partie amont et obturent le canal annulaire pour la partie aval, les dites portes étant par ailleurs manoeuvrées par des organes d'actionnement ou vérins, attelés d'une part à la section amont fixe du capotage et d'autre part en une région des portes située entre leur zone d'articulation au capotage et leur extrémité amont.

Dans le brevet français 1482538, les portes basculantes sont en nombre très important (plus d'une vingtaine) et se chevauchent les unes les autres. Il en découle d'une part une grande complexité mécanique du dispositif nécessitant un synchronisme parfait de la manoeuvre des portes par leurs vérins.

De plus, le grand nombre des vérins (plus de vingt) et des points d'articulation des portes entraîne nécessairement un accroissement du poids et du coût de fabrication préjudiciable. Par ailleurs, la géométrie particulière des portes du brevet 1482538 et notamment le fait que l'axe de pivotement est entièrement situé dans l'épaisseur du capotage entraîne des conditions de travail des vérins lors de l'ouverture des portes peu favorables. En effet, au début du déploiement, le bras de levier des vérins est très faible et leurs tiges travaillent à la compression en subissant donc un effort de flambage important. En même temps, la puissance globale demandée aux vérins lors de l'ouverture doit être suffisante pour vaincre l'effort résistant de la totalité du flux circulant dans le canal annulaire et s'exerçant sur la partie aval des portes qui représente la moitié de la superficie de celles-ci. Enfin, l'angle d'ouverture des portes est relativement faible et ne dépasse pas 45° par rapport à l'axe longitudinal du moteur de telle sorte que l'effet d'aérofrein créé par la partie amont des portes est faible et que les passages libérés dans le capotage pour la sortie du flux moteur sont restreints.

On connaît également, d'après le brevet US 3 605 411, un dispositif d'inversion de poussée pour turboréacteur mais ce dispositif, qui utilise des portes formées chacune d'une porte extérieure et d'une porte intérieure mobiles l'une par rapport à l'autre, a une structure telle que lors de l'ouverture, l'action du flux d'air circulant dans le canal annulaire vient s'exercer sur des parties de porte qui sont situées, par rapport à l'axe de pivotement, à l'opposé du point où s'exerce l'action du mécanisme d'ouverture de sorte qu'il en résulte une résistance à l'ouverture.

La présente invention propose un dispositif d'inversion perfectionné qui élimine l'ensemble de ces inconvénients et présente une grande simplicité de structure et de fonctionnement alliée à une réduction de poids considérable par rapport aux dispositifs connus, accompagnée d'une amélioration significative de l'effet de réverse.

Pour atteindre ce but, le dispositif d'inversion de l'invention est constitué par un nombre limité de portes, de préférence inférieur à six, et sous son aspect le plus général, le dit dispositif d'inversion est caractérisé en ce qu'il comporte, en dehors des organes d'actionnement des portes, des moyens d'assistance à l'ouverture des portes agissant dès que les portes commencent à basculer, ces moyens d'assistance à l'ouverture étant constitués par une zone des portes elles-mêmes, sur laquelle la poussée du flux circulant dans le canal annulaire exerce une action inverse de celle qu'elle exerce sur la partie aval de la porte, en ce que l'axe géométrique autour duquel pivote chaque porte est constitué par une corde du canal annulaire, dont le point médian est approximativement à égale distance de la périphérie extérieure du capotage et de la surface extérieure de la structure du moteur, et est arrangé de façon que le flux gazeux longeant la peau interne de la partie amont fixe du capotage touche le peau interne des portes au début de leur ouverture, à un endroit tel qu'une perpendiculaire à cet endroit pease toujours en amont de l'axe de pivotement.

Ainsi, dès que les portes commencent à s'ouvrir, la poussée du flux s'exerçant sur la partie de la porte située entre l'axe de pivotement et le capotage aide à l'ouverture en équilibrant la poussée en sens inverse exercée sur la partie de la porte en aval de l'axe de pivotement. Grâce à cet effet, il est possible d'utiliser des vérins d'actionnement des portes d'une puissance relativement faible, puisqu'ils auront surtout pour rôle de freiner l'ouverture des portes dès que celles-ci commencent à s'ouvrir, étant donné que la partie amont de la porte, en agissant comme aérofrein a également une action dans le sens de l'ouverture. Ainsi les vérins travaillent essentiellement à la traction sans risque de flambage contrairement à ce qui se produit notamment dans le brevet 1482538 et l'on peut utiliser des sections réduites, ce qui entraîne une diminution de poids et d'encombrement.

Les vérins peuvent être attelés en une zone quelconque des portes comprise entre leur axe de pivotement et leur extrémité amont. Toutefois, on a déterminé que, selon l'invention, la position optimale du point d'attelage du vérin sur la porte devait être située approximativement à mi-distance des extrémités amont et aval de celle-ci, ce qui assure un bras de levier suffisant du vérin pour l'ensemble du déploiement, une bonne stabilité de la porte, une répartition optimale des efforts sur celle-ci et par conséquent une optimisation de la structure mécanique avec pour résultat un poids de porte minimal.

De même, on aura intérêt à faire en sorte que l'axe géométrique de pivotement de chaque porte soit situé approximativement à mi-distance de ce point d'attelage et de l'extrémité aval du la porte de telle façon que la longueur de la partie aval mesurée dans la zone médiane de la porte soit environ trois fois plus courte que la longueur de la partie amont.

Grâce à cette disposition relative de l'axe de pivotement par rapport au capotage et par rapport au point d'attelage du vérin, l'angle d'ouverture des portes en position totalement déployée peut être largement supérieure à 60° par rapport à l'axe du moteur et avoisiner 90°. On peut ainsi obtenir un dégagement maximal des passages pour le flux dans le capotage et obtenir un effet d'aérofrein maximal de la part des portes sans gêner le guidage du flux dévié de l'intérieur du canal annulaire vers l'extérieur.

Chaque porte peut être articulée par ses bords latéraux entre deux poutres s'étendant parallèlement à l'axe du moteur et reliant les sections fixes du capotage situées de part et d'autre de la section intermédiaire formée par les portes, ces poutres formant elles-mêmes une partie du capotage. Ainsi est assurée, avec le vérin associé à chaque porte, l'indépendance totale des portes qui peuvent donc être commandées indépendamment les unes des autres. Ceci présente l'avantage de ne nécessiter aucun système coûteux de synchronisation du mouvement des vérins et des portes et donc d'alléger encore le dispositif d'inversion. Un autre avantage est de permettre une manoeuvre sélective d'ouverture des portes, certaines portes pouvant demeurer fermées pendant que d'autres s'ouvrent, ce qui peut présenter un intérêt lors de certaines manoeuvres ou dans certaines applications.

On décrira à présent, à titre d'exemple non limitatif, une forme de réalisation préférée de l'invention en référence aux dessins annexés dans lesquels:

— la figure 1 est une vue schématique en perspective latérale d'un moteur d'avion équipé d'un dispositif d'inversion de poussée selon l'invention représenté en position escamotée;

— la figure 2 est une vue semblable à la figure 1 montrant le dispositif d'inversion déployé en position active;

— la figure 3 est une vue frontale du dispositif de la figure 2;

— la figure 4 est une coupe partielle longitudinale d'une partie du dispositif selon la ligne IV—IV de la figure 3;

— la figure 5 est une coupe transversale selon la ligne V—V de la figure 4.

Dans la description qui suit, le dispositif d'inversion selon l'invention est conçu pour équiper un moteur d'avion à double flux fixé sous les ailes et on décrira donc cette disposition particulière à titre d'exemple sans pour autant qu'elle puisse être considérée comme une limitation de l'invention.

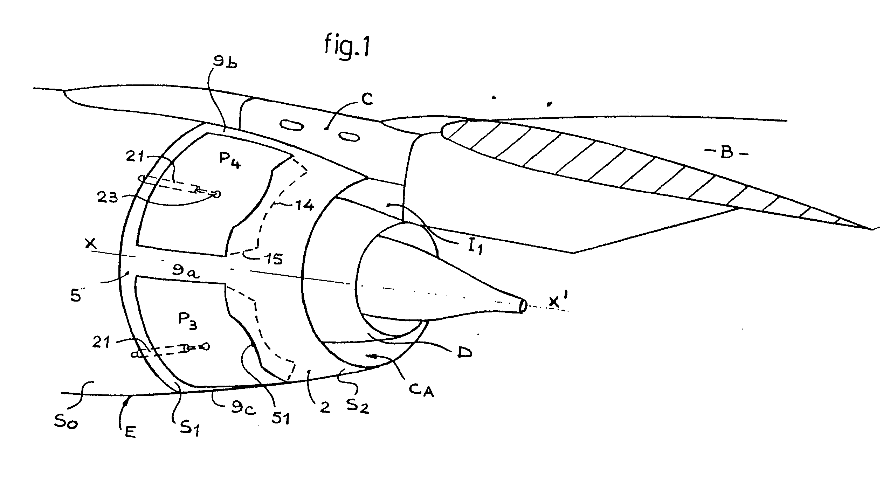

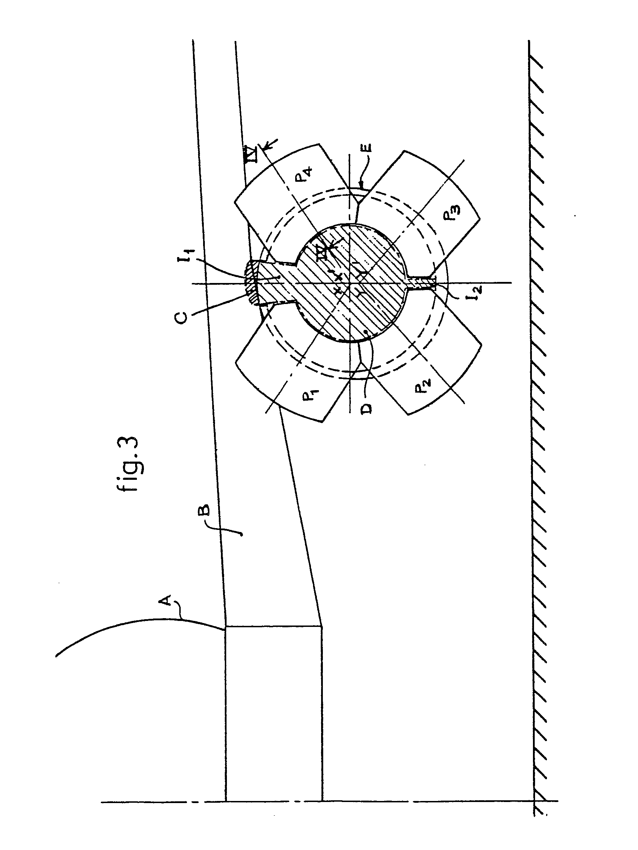

Sur la figure 3, on a représenté schématiquement en A la cellule d'un avion et en B une aile sous laquelle est fixé, par l'intermédiaire d'un mât classique C une structure de moteur D dont l'axe longitudinal est représenté en x—x'. Comme on le voit sur les figures 1 à 5, cette structure de moteur D est entourée par un capotage annulaire désigné de façon générale en E, qui ménage avec la surface externe 1 du moteur D un canal annulaire CA dans lequel circule de l'amont (à gauche lorsqu'on regarde les figures 1, 2 et 4) vers l'aval un flux gazeux froid propulsé de façon classique par une soufflante ou "Fan" frontal (non représenté) monté à l'avant de la structure du moteur.

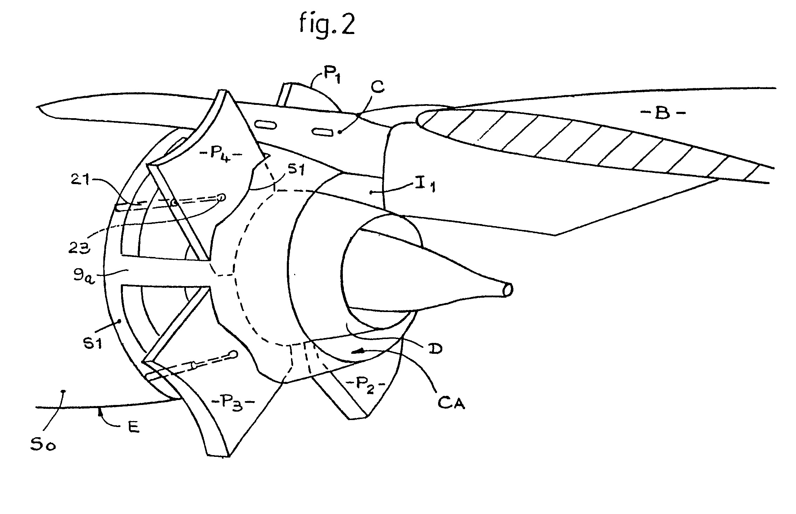

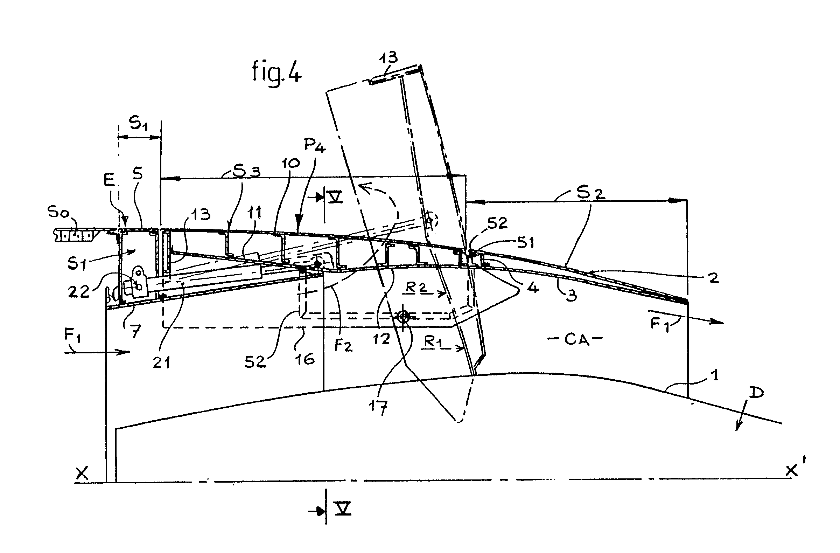

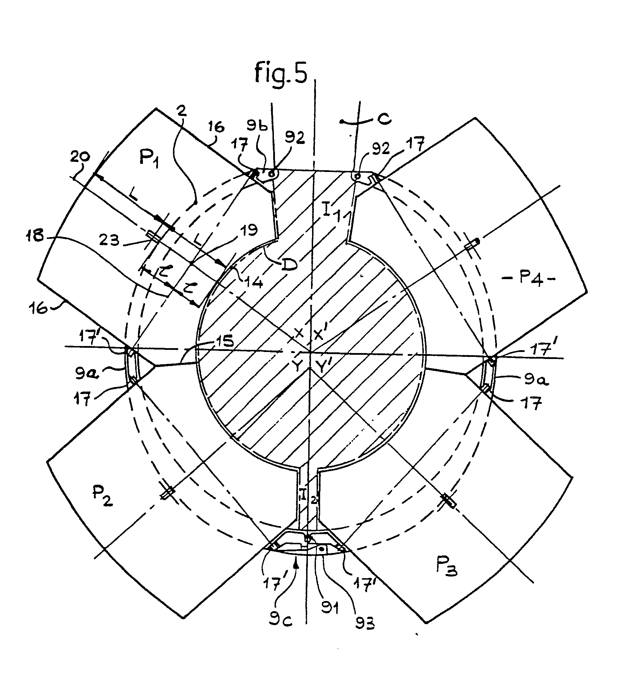

Le capotage E comporte une section avant de capots moteur S0 extérieure à l'invention, et un corps arrière comprenant les sections fixes amont S1 et aval S2 qui sont reliées l'une à l'autre par des poutres longitudinales 9a, 9b et 9c (voir figure 5). La section intermédiaire S3 est constituée par des éléments mobiles ou portes (qui dans l'exemple représenté sont au nombre de quatre) P1, P2, P3, P4, ces portes étant susceptibles de basculer d'une position escamotée représentée en trait plein aux figures 1 et 4, position dans laquelle les dites portes complètent le capotage et assurent, en cours de vol normal de l'avion le guidage du flux gazeux d'amont en aval selon la flèche F1 de la figure 4, à une position déployée d'inversion de poussée représentée en trait plein aux figures 2, 3, 5 et en trait interrompu à la figure 4, les dites portes assurant dans cette position l'obturation du canal annulaire CA et la libération de passages latéraux dans le capotage par lesquels le flux est dévié radialement selon la flèche F2 vers l'extérieur.

La section fixe aval S2 présente une structure à double peau, une peau externe 2 et une peau interne 3, écartée à l'avant de la peau 2 par un raidisseur 4, l'extrémité amont de la peau externe 2 débordant légèrement en 51 par rapport au raidisseur 4.

La section fixe amont S1 est un caisson annulaire compris entre une peau extérieure 5 et l'avant de la bague intérieure 7. Les poutres 9b et 9c maintiennent par l'intermédiaire des parois des îlots I1 et I2 le capotage interne du moteur D. La bague 7 forme avec la peau 3 la paroi extérieure du canal annulaire CA.

Chacune des portes est également constituée de deux peaux liées l'une à l'autre par des entretoises de raidissage internes qui assurent en même temps leur écartement. En position de portes fermées, la peau externe 10 des portes se trouve dans le prolongement des peaux fixes 2 et 5.

La peau interne de la porte présente quant à elle une forme convexe de telle façon que la zone arrière 12 se trouve (en position de porte escamotée) dans le prolongement des peaux 7 et 3 et complète la paroi externe du canal annulaire CA, tandis que la zone avant 11 vient chevaucher la bague 7, en s'en écartant progressivement. A l'avant, la porte comporte un bec déflecteur 13 sensiblement perpendiculaire à la peau 10. Le bord arrière 14 de chaque porte est conformé afin qu'en position déployée représentée à la figure 5, ce bord 14 puisse épouser la forme de la structure du moteur D. Le bord 14 est raccordé par des parties en biais 15 aux deux bords latéraux 16 parallèles de la porte, les parties en biais 15 de chaque porte s'ajustant aux parties 15 correspondantes de la porte voisine ou à la forme des îlots I1, I2, solidaires de la structure de moteur, ainsi qu'on le voit à la figure 5. Ainsi, en position déployée, l'arrière des portes obture presque totalement le canal annulaire CA.

Chaque porte est munie de deux pivots 17—17' situés respectivement sur chacun des bords latéraux parallèles 16.

L'axe géométrique de pivotement 18 commun aux deux pivots 17—17' de chaque porte est perpendiculaire au plan médian 20 de la porte. Pour les portes P1 et P4, le pivot 17 est logé dans la poutre 9b, voisine du mât C et le pivot 17' est logé dans la poutre 9a adjacente, tandis que pour les portes P2 et P3, le pivot 17 est logé dans l'une des deux poutres opposees 9a et le pivot 17' dans la poutre inférieure 9c, voisine de l'îlot I2. Comme on le voit particulièrement à la figure 5, l'axe de pivotement 18 des portes constitue une "corde" du canal annulaire CA, le point médian 19 de la corde étant à peu près à égale distance ("1") de la périphérie extérieure du moteur D et de la paroi externe du capotage. Le point 19 est de préférence également à peu près situé au quart inférieur de la longueur totale de la porte.

Grâce à cette disposition, on comprend que lorsque les portes basculent vers leur position déployée, le flux F1 exerce une poussée R1 sur la partie arrière de la porte située sous l'axe de pivotement, cette poussée R1 s'opposant à l'ouverture.

Mais, dès le début de l'ouverture, le flux F1 exerce une poussée R2 antagoniste (dans le sens de l'ouverture) sur la zone de la porte située au-dessus de l'axe de pivotement 17—17', ces poussées R1 et R2 s'équilibrant pratiquement en raison des surfaces sensiblement équivalentes sur lesquelles elles s'exercent. Il en découle que l'effort demandé aux vérins pour l'ouverture des portes est relativement faible et pourra même être un effort de freinage.

Par ailleurs, toujours grâce à cette disposition de l'axe de pivotement, la partie arrière de la porte étant de longueur réduite permet une ouverture de la porte supérieure à 60° par rapport à l'axe longitudinal du moteur et pourrait atteindre 90° tout en maintenant la section S2 fixe. De ce fait, les passages radiaux ménagés dans le capotage pour la déviation du flux vers l'extérieur sont largement dégagés et l'action d'aérofrein des portes est accrue dans des proportions notables, effet agissant également dans le sens de l'ouverture des portes. Par ailleurs, comme on le voit sur les figures 4 et 5, plus de la moitié de la surface des portes fait saillie à l'extérieur du capotage, ce qui facilite encore la déviation et le guidage du flux vers l'extérieur selon la flèche F2.

Chaque porte est actionnée dans l'exemple représenté par un seul vérin 21, ce qui est une disposition préférée, mais non limitative. On pourrait en effet, si besoin était, utiliser deux ou plusieurs vérins. Toutefois, étant donné les excellentes conditions mécaniques dans lesquelles travaille le vérin grâce à la géométrie de portes retenue, l'emploi d'un seul vérin par porte permet de limiter le poids du système d'inversion. Le pied du cylindre du vérin 21 est articulé en 22 sur le caisson S1, tandis que l'extrémité de la tige est attelée en 23 dans une chape prévue approximativement au centre de la paroi interne de la porte, c'est-à-dire en un point situé sur l'axe médian 20 de porte et à égale distance L de l'avant et de l'arrière de celle-ci.

On notera que les quatre vérins peuvent être indépendants les uns des autres, leur actionnement pouvant n'être pas synchronisé; étant donné que les portes sont indépendantes les unes des autres, l'ouverture des portes peut en effet accepter de légers décalages d'une porte à l'autre. Cette disposition permet également d'ouvrir certaines des portes seulement, par exemple une porte sur deux.

On notera également, comme on l'a déjà indiqué, que pendant toute la phase d'ouverture des portes, étant donné que la somme des efforts agissant sur les portes les sollicite vers leur position ouverte, les vérins travaillent à la traction et ont surtout pour rôle de freiner l'ouverture des portes. Il en découle que la section et la puissance des vérins peuvent être minimales, ce qui assure une diminution de poids par rapport aux structures d'inverseur classiques.

Pour assurer l'étanchéité des portes en position fermée, on a prévu un joint d'étanchéité 52 sur le pourtour de chacune des quatre ouvertures pratiquées dans l'arrière corps (voir figure 4).

Par ailleurs, pour assurer l'accès à la structure moteur, le corps arrière pourra être constitué par deux demi-coquilles (figure 5) articulées respectivement en 92 au mât C, les bords opposés étant en butée en 91 et serrés l'un contre l'autre par un mécanisme de verrouillage 93.

Comme on le voit à la figure 5, en position déployée des portes, les plans médians 20 des deux portes supérieures P1 et P4 se coupent sur l'axe moteur x—x', tandis que les plans médians des deux portes inférieures P2 et P3 se coupent selon une ligne y—y', décalée vers le bas par rapport à l'axe moteur. Ceci est dû au fait que les pivots inférieurs 17' des portes P2 et P3 sont à une distance plus grande de l'axe moteur que les six autres pivots des portes.

Cette disposition permet l'ouverture des portes inférieures sensiblement au même angle que les portes supérieures malgré la différence de forme externe de la partie inférieure du corps arrière (renflement dû à la présence d'équipements prévus en général à la partie inférieure du moteur).

**Revendications**

1. Dispositif d'inversion de poussée en combinaison avec un turboréacteur d'avion à capotage extérieur (E) entourant une structure de moteur (D) et délimitant avec celle-ci un canal annulaire (CA) pour l'écoulement d'un flux gazeux depuis une région amont vers une région aval, le dispositif d'inversion étant constitué par des éléments mobiles (P1—P4) d'une section intermédiaire du capotage qui sont susceptibles de basculer d'une position inactive, dans laquelle ils se trouvent dans le prolongement de la partie fixe du capotage, à une position d'inversion de poussée dans laquelle ils s'étendent transversalement par rapport au canal annulaire qu'ils obturent tout en libérant dans le capotage un passage permettant au flux d'être dévié radialement vers l'extérieur et vers l'amont, les éléments mobiles (P1—P4) de la section intermédiaire étant constitués par des portes articulées dans une zone intermédiaire de leur longueur sur la partie fixe du capotage, lesdites portes présentant ainsi des parties amont et aval qui, en position d'inversion, font respectivement saillie à l'extérieur du capotage pour la partie amont et obturent le canal annulaire pour la partie aval, lesdites portes étant par ailleurs manoeuvrées par des organes d'actionnement ou vérins (21) attelés d'une part à la section amont fixe du capotage et d'autre part en une région des portes située entre leur zone d'articulation au capotage et leur extrémité amont, caractérisé en ce que le dispositif d'inversion comporte, en dehors des organes (21) d'actionnement des portes (P1, P2, P3, P4), des moyens d'assistance à l'ouverture agissant dès que les portes commencent à basculer, ces moyens d'assistance à l'ouverture étant constitués par une zone des portes elles-même sur laquelle la poussée du flux circulant dans le canal annulaire (CA) exerce une action inverse de celle qu'elle exerce sur la partie aval de la porte (P1, P2, P3, P4), en ce que l'axe géométrique (18) autour duquel pivote chaque porte est constitué par une corde du canal annulaire (CA) dont le point médian (19) est approximativement à égale distance de la périphérie extérieure du capotage et de la surface extérieure de la structure du moteur (D), et est arrangé de façon que le flux gazeux longeant la peau interne (7) de la partie amont fixe du capotage touche la peau interne des portes (P1, P2, P3, P4) au debut de leur ouverture, à un endroit tel qu'une perpendiculaire à cet endroit passe toujour en amont de l'axe de pivotement (18).

2. Dispositif selon la revendication 1, caractérisé en ce que le point d'attelage (23) du vérin d'actionnement sur la porte est situé sensiblement à mi-distance des extrémités amont et aval de celle-ci et entre l'axe géométrique (18) de pivotement et l'extrémité amont (13).

3. Dispositif d'inversion selon l'une quelconque des revendications 1 ou 2, caractérisé en ce que pour chaque porte, la longueur de la partie aval mesurée dans la zone médiane de la porte, est approximativement trois fois plus courte que la longueur de la partie amont.

4. Dispositif d'inversion selon l'une quelconque des revendications 1 à 3, caractérisé en ce que l'angle d'ouverture des portes en position déployée est compris entre 60° et 90° par rapport à l'axe du moteur (x—x').

5. Dispositif d'inversion selon l'une quelconque des revendications 1 à 4, caractérisé en ce qu'il est constitué de quatre portes (P1, P2, P3, P4) couvrant chacune un peu moins de 90° de la périphérie du capotage.

6. Dispositif selon l'une quelconque des revendications 1 à 5, caractérisé en ce que, en position d'inversion de poussée, la surface interne de porte faisant saillie hors du canal annulaire (CA) est supérieure à la surface de porte obturant ledit canal annulaire.

7. Dispositif selon l'une quelconque des revendications 1 à 6, caractérisé en ce que chaque porte est manoeuvrée indépendamment des autres.

8. Dispositif selon l'une quelconque des revendications 1 à 7, adapté à une forme extérieure d'arrière-corps non circulaire caractérisé en ce que certains des points de pivot des portes (17—17') sont à des distances différentes de l'axe (x—x') du moteur pour permettre un angle d'ouverture sensiblement identique de toutes les portes.

**Patentansprüche**

1. Schubenkehrvorrichtung in Kombination mit einem Flugzeugstrahlmotor mit einer äußeren Verkleidung (E), die eine Motorstruktur (D) umgibt und mit dieser einen Ringkanal (CA) zur Durchströmung mit einem Gasstrom von einem stromaufwärtigen Bereich zu einem stromabwärtigen Bereich gebrenzt, wobei die Umkehrvorrichtung von bewegbaren Elementen (P1—P4) eines mittleren Abschnittes der Verkleidung gebildet ist, die aus einer Ruhestellung, in der sie sich in der Verlängerung des festen Teils der Verkleidung befinden, in eine Schubumkehrstellung verschwenkbar sind, in der sie sich quer zu dem Ringkanal erstrecken, den sie unter Freigabe eines Durchlasses in der Verkleidung sperren, der dem Strom ermöglicht, radial nach außen und stromaufwärts umgelenkt zu werden, wobei die bewegbaren Elemente (P1—P4) des mittleren Abschnittes von Türen gebildet sind, die in einem mittleren Bereich ihrer Länge an einem festen Teil der Verkleidung angelenkt sind, wobei die Türen somit stromaufwärtige und stromabwärtige Abschnitte aufweisen, die in der Umkehrstellung nach außerhalb der Verkleidung bezüglich des stromaufwärtigen Abschnittes vorstehen und bezüglich des stromabwärtigen Abschnittes den Ringkanal schließen, und wobei die Türen auch durch Betätigungsorgane oder Linearantriebe (21) betätigbar sind, die einerseits an dem stromaufwärtigen festen Abschnitt der Verkleidung und andererseits mit einem Bereich der Türen gekoppelt sind, der zwischen ihrem Schwenkbereich an der Verkleidung und ihrem stromaufwärtigen Ende liegt, dadurch gekennzeichnet, daß die Umkehrvorrichtung außer den Betätigungsorganen (21) für die Türen (P1, P2, P3, P4) Hilfsmittel zum Öffnen umfaßt, die wirken, so bald die Türen anfangen, zu schwenken, daß die Hilfsmittel zum Öffnen von einem Bereich der Türen selbst gebildet sind, auf den der Schub des in dem Ringkanal (CA) strömenden Stromes eine Wirkung ausübt, die umgekehrt zu derjenigen ist, die der Schub auf den stromabwärtigen Abschnitt der Tür (P1, P2, P3, P4) ausübt, und daß die geometrische Achse (18), um die jede Tür verschwenkbar ist, von einer Sehne des Ringkanals (Ca) gebildet wird, deren mittlerer Punkt (19) ungefähr gleich weit von der äußeren Peripherie der Verkleidung und der äußeren Oberfläche der Motorstruktur (D) entfernt ist, und derart angeordnet ist, daß der Gasstrom, der an der Innenhaut (7) des stromaufwärtigen, festen Teils der Verkleidung entlangströmt, die Innenseite der Türen (P1, P2, P3, P4) zu Beginn ihres Öffnens an einer Stelle derart berührt, daß eine Senkrechte an diese Stelle stets stomauf der Schwenkachse (18) verläuft.

2. Vorrichtung nach Anspruch 1, dadurch gekennzeichnet, daß sich der Kopplungspunkt (23) des Betätigungslinearantriebes an der Tür im wesentlichen auf halber Strecke zwischen ihrem stromaufwärtigen und stromabwärtigen Ende und zwischen der geometrischen Schwenkachse (18) und dem stromaufwärtigen Ende (13) befindet.

3. Umkehrvorrichtung nach Anspruch 1 oder 2, dadurch gekennzeichnet, daß die in dem mittleren Bereich der Tür gemessene Länge des stromabwärtigen Abschnittes ungefähr dreimal kürzer als die Länge des stromaufwärtigen Abschnittes ist.

4. Umkehrvorrichtung nach einem der Ansprüche 1 bis 3, dadurch gekennzeichnet, daß der Öffnungswinkel der Türen in ausgefahrener Stellung zwischen 60 und 90° in Bezug auf die Motorachse (x—x') liegt.

5. Umkehrvorrichtung nach einem der Ansprüche 1 bis 4, dadurch gekennzeichnet, daß sie von vier Türen (P1, P2, P3, P4) gebildet ist, von denen jede wenigstens etwas weniger als 90° des Umfangs der Verkleidung überdeckt.

6. Vorrichtung nach einem der Ansprüche 1 bis 5, dadurch gekennzeichnet, daß in der Schubumkehrstellung die innere Oberfläche der Tür, die außerhalb des Ringkanals (CA) vorsteht, größer als die Oberfläche der Tür ist, die den Ringkanal versperrt.

7. Vorrichtung nach einem der Ansprüche 1 bis 6, dadurch gekennzeichnet, daß jede Türe unabhängig von den anderen betätigbar ist.

8. Vorrichtung nach einem der Ansprüche 1 bis 7, die an eine nichtkreisförmige Außenform des hinteren Teils angepaßt ist, dadurch gekennzeichnet, daß gewisse Schwenkpunkte der Türen (17—17') unterschiedliche Abstände von der Achse (x—x') des Motors aufweisen, um einen im wesentlichen für alle Türen gleichen Öffnungswinkel zu ermöglichen.

**Claims**

1. A thrust reversal device in combination with an aircraft turbojet with external cowling (E) surrounding an engine structure (D) and defining therewith an annular channel (CA) for the flow of a gas from an upstream region to a downstream region, the reversal device being formed by mobile elements (P1—P4) of an intermediate section of the cowling which are pivotable from an inactive position, in which they are situated in the extension of the fixed part of the cowling, to a thrust reversal position in which they extend transversally with respect to the annular channel which they close off while freeing in the cowling a passage for diverting the flow radially outwardly and upstream, the mobile elements (P1—P4) of the intermediate section being formed by doors pivotally mounted in an intermediate zone of their length to the fixed part of the cowling, said doors thus having upstream and downstream parts which, in the reversal position, project respectively outside of the cowling for the upstream part and close off the annular channel for the downstream part, said doors being further operated by actuating members or cylinders (21) coupled on the one hand to the fixed upstream section of the cowling and on the other in a region of the doors situated between their zone of pivotal mounting to the cowling and their upstream end, characterized in that the reversal device comprises, besides the members (21) for actuating the doors (P1, P2, P3, P4), opening assistance means acting as soon as the doors begin to swing, these opening assistance means being formed by a zone of the doors themselves on which the thrust of the flow passing through the annular channel (CA) exerts an action the reverse of that which it exerts on the downstream part of the door (P1, P2, P3, P4), and in that the geometric axis (18) about which each door pivots is formed by a chord of the annular channel (CA) whose middle point (19) is approximately at equal distance from the outer periphery of the cowling and from the outer surface of the structure of the engine (D), and is arranged so that the gas flow passing along the internal skin (7) of the fixed upstream part of the cowling touches the internal skin of the doors (P1, P2, P3, P4) at the beginning of opening thereof, at a position such that a perpendicular to this position always passes upstream of the pivoting axis (18).

2. Device according to claim 1, characterized in that the coupling point (23) of the actuating cylinder to the door is situated substantially half way between the upstream and downstream ends thereof and between the geometric pivoting axis (18) and the upstream end (13).

3. Reversal device according to any one of claims 1 or 2, characterized in that, for each door, the length of the downstream part measured in the median zone of the door is approximately three times shorter than the length of the upstream part.

4. Reversal device according to any one of claims 1 to 3, characterized in that the opening angle of the doors in the opened out position is between 60° and 90° with respect to the axis of the engine (X—X').

5. Reversal device according to any one of claims 1 to 4, characterized in that it is formed of four doors (P1, P2, P3, P4) each covering a little less than 90° of the periphery of the cowling.

6. Device according to any one of claims 1 to 5, characterized in that, in the thrust reversal position, the internal door area projecting out of the annular channel (CA) is greater than the door area closing off said annular channel.

7. Device according to any one of claims 1 to 6, characterized in that each door is operated independently of the others.

8. Device according to any one of claims 1 to 7, adapted to a non circular rear body external form, characterized in that some of the pivot points of the doors (17—17') are at different distances from the axis (X—X') of the engine so as to allow opening at an opening angle substantially identical for all the doors.

fig.1

0 067 747

fig.2

fig.3

fig.4

fig.5